# FASCICULE DE BREVET EUROPEEN

(11) **EP 4 438 912 B1**
(45) Date de publication et mention de la délivrance du brevet: **02.09.2026**
(21) Numéro de dépôt: 24315104.0
(22) Date de dépôt: 22.03.2024
(51) Int. Cl.: F16B 13/12, F16B 13/06, F16B 13/08

(54) **CHEVILLE A EXPANSION ET ASSEMBLAGE DE CHEVILLE A EXPANSION**
SPREIZDÜBEL UND SPREIZDÜBELANORDNUNG
EXPANSION DOWEL AND EXPANSION DOWEL ASSEMBLY

(30) Priorité: 30.03.2023 FR 2303087; 28.11.2023 FR 2313151
(43) Date de publication de la demande: 02.10.2024
(73) Titulaire: Illinois Tool Works Inc., Glenview, IL 60025 (US)
(72) Inventeur: Couvreur, Jérôme, Glenview, 60025 (US)
(74) Mandataire: HGF

(56) Documents cités:
- EP-A1- 2 813 340
- WO-A1-2020/120196
- US-A- 4 182 217
- US-A1- 2009 324 359
- US-A1- 2011 081 219

## Description

L'invention concerne généralement une cheville à expansion et un assemblage de cheville à expansion.

### Contexte

Les chevilles à expansion (voir par exemple EP 2 813 340 A1) sont généralement utilisées pour fixer un objet dans une structure de support telle qu'un mur en plaques de plâtre, en béton ou en briques. Une cheville à expansion est insérée dans un trou de la structure de support et un élément de fixation est inséré dans la cheville à expansion. La cheville à expansion se déploie vers l'extérieur, ce qui permet de fixer l'élément de fixation dans le trou.

Certaines chevilles à expansion conviennent à l'expansion dans des structures de support constituées de différents matériaux et ayant différentes épaisseurs, mais leur utilisation est limitée à l'ancrage de charges ayant un poids relativement faible.

D'autres chevilles à expansion sont également connues, qui offrent des performances de maintien satisfaisantes dans des matériaux durs et compacts tels que le béton. Toutefois, ces chevilles à expansion ne conviennent pas pour fixer des charges relativement lourdes à des structures de support non compactes, telles que des murs en briques, des matériaux friables ou des matériaux non homogènes, en raison d'un mauvais couplage avec la surface de la structure de support.

Il serait souhaitable de fournir une cheville à expansion qui réponde aux problèmes identifiés ci-dessus. En particulier, l'invention a pour objet de fournir une cheville à expansion ayant une meilleure performance de maintien lorsqu'elle est utilisée avec une variété de structures de support différentes.

La présente invention offre au moins une alternative aux chevilles à expansion de l'art antérieur.

### Résumé de l'invention

La présente invention propose une cheville à expansion et un assemblage de cheville à expansion tels que décrits ci-après.

Selon un aspect de la présente invention, il est proposé une cheville à expansion comprenant une tête et un manchon s'étendant à partir de la tête le long d'un axe longitudinal, le manchon comprenant :
au moins une languette d'expansion ;
un canal ouvert au niveau de la tête pour recevoir un élément de fixation et disposé de manière que la/les languette(s) d'expansion se déploie(nt) vers l'extérieur lorsque l'élément de fixation est poussé dans le canal à partir de la tête ; et
une portion portant un moyen de préhension de filetage disposée à une extrémité opposée du canal par rapport à la tête, la portion portant un moyen de préhension de filetage étant configurée pour être engagée par une portion portant un filetage mâle de l'élément de fixation lorsqu'il est vissé dans le canal, de sorte à tirer la portion portant un moyen de préhension de filetage vers la tête par la rotation de l'élément de fixation afin d'étendre la/les languette(s) d'expansion vers l'extérieur.

Ainsi, la cheville à expansion de la présente invention présente de deux modes d'expansion différents, selon que l'élément de fixation est poussé (par exemple frappé ou martelé) dans le canal ou vissé dans le canal. Lorsqu'une fixation est poussée dans le canal dans un premier mode d'expansion, la/les languette(s) d'expansion de la cheville à expansion se déploie(nt) vers l'extérieur pour s'engager dans la structure de support, afin de maintenir la cheville à expansion contre la structure de support. Si la force de maintien contre la structure de support n'est pas suffisante, par exemple si la structure de support est faite d'un matériau non compact, la cheville à expansion peut être utilisée dans le second mode d'expansion en vissant l'élément de fixation pour qu'il s'engage dans la partie filetée de la cheville à expansion afin d'étendre la/les languette(s) d'expansion vers l'extérieur, ce qui augmente encore la force de maintien contre le support. Ceci est particulièrement avantageux car la performance de maintien de la cheville à expansion varie pour permettre l'insertion et le maintien de la cheville à expansion dans des structures de support faites de différents matériaux et ayant des épaisseurs différentes. Par exemple, la portion portant un moyen de préhension de filetage est une portion portant un filetage femelle prévu pour coopérer avec le filetage male de l'élément de fixation.

Dans certains exemples, le manchon comprend un guide de fixation disposé dans le canal, adapté pour aligner l'élément de fixation avec l'axe longitudinal.

Dans certains exemples, le guide de fixation comprend une surface inclinée à proximité de l'extrémité de la tête de la cheville à expansion.

Dans certains exemples, la surface inclinée s'étend entre une paroi intérieure du canal et une portion rétrécie du guide de fixation.

Dans certains exemples, la portion rétrécie du guide de fixation comprend une section transversale en forme de C.

Dans certains exemples, le manchon comprend une paire de guides de fixation opposés dans le canal.

Dans certains exemples, le manchon comprend au moins deux languettes d'expansion.

Dans certains exemples, le tirage de la portion portant un moyen de préhension de filetage vers la tête par la rotation de l'élément de fixation est organisée pour déformer en torsion les languettes d'expansion.

Dans certains exemples, la déformation par torsion des languettes d'expansion fait qu'au moins une languette d'expansion superpose au moins une autre languette d'expansion.

Dans certains exemples, la déformation en torsion des languettes d'expansion fait qu'au moins une languette d'expansion s'enroule autour d'au moins une autre languette d'expansion.

Dans certains exemples, le manchon peut comprendre au moins une portion déformable s'étendant entre la portion portant un moyen de préhension de filetage et la tête. Dans certains exemples, la (les) portion(s) déformable(s) peut (peuvent) être déformée(s) en tirant la portion portant un moyen de préhension de filetage vers la tête par la rotation de l'élément de fixation. Dans certains exemples, la déformation de la (des) portion(s) déformable(s) peut déformer en torsion les languettes d'expansion, amenant au moins une languette d'expansion à s'enrouler autour d'une autre languette d'expansion et/ou à la superposer.

Par exemple, lorsque l'élément de fixation est poussé dans le canal à partir de la tête, la/les languette(s) d'expansion se déploie(nt) vers l'extérieur jusqu'à un premier déplacement.

Par exemple, lorsque la portion portant un moyen de préhension de filetage est tirée vers la tête par le vissage (ou la rotation) de l'élément de fixation, la/les languette(s) d'expansion se déploie(nt) vers l'extérieur jusqu'à un second déplacement supérieur au premier déplacement. L'expansion de la/les languette(s) d'expansion à un second déplacement supérieur au premier permet d'augmenter la force de maintien de la cheville à expansion contre la structure de support.

Dans certains exemples, le manchon comprend au moins une portion déformable qui s'étend entre la portion portant un moyen de préhension de filetage et la tête.

Par exemple, la/les portions déformable(s) peut/peuvent être comprimée(s).

Dans certains exemples, la portion portant un moyen de préhension de filetage est formée d'un seul tenant avec la/les portions déformable(s).

Dans certains exemples, la traction de la portion portant un moyen de préhension de filetage vers la tête par la rotation de l'élément de fixation est prévue pour affaisser la/les portions déformable(s).

Dans certains exemples, la/les portion(s) déformable(s) est/sont déformable(s) en torsion.

Dans certains exemples, la/les languette(s) d'expansion est/sont définie(s) par une ou plusieurs fentes à travers la paroi du manchon.

Dans certains exemples, la/les languette(s) d'expansion est/sont reliée(s) de manière amovible à la portion portant un moyen de préhension de filetage.

Dans certains exemples, la/les languette(s) d'expansion est/sont reliée(s) à la portion portant un moyen de préhension de filetage par une connexion frangible.

Dans certains exemples, la connexion frangible est configurée pour être rompue afin de séparer la/les languette(s) d'expansion de la portion portant un moyen de préhension de filetage lorsque la/les languette(s) d'expansion se déploie(nt) vers l'extérieur.

Dans certains exemples, le manchon comprend plusieurs languettes d'expansion.

Par exemple, deux des languettes d'expansion sont disposées sur les côtés opposés du manchon et configurées pour s'écarter l'une de l'autre vers l'extérieur.

Dans certains exemples, le manchon est tubulaire.

Dans certains exemples, le manchon comprend quatre fentes.

Dans des exemples, les fentes comprennent une première fente se terminant sur un premier bord.

Dans des exemples, les fentes comprennent une deuxième fente se terminant par un deuxième bord.

Dans des exemples, le premier bord et le deuxième bord sont décalés de 90 degrés l'un par rapport à l'autre.

Dans des exemples, les quatre fentes comprennent une paire de premières fentes disposées radialement l'une en face de l'autre sur le manchon.

Dans des exemples, les quatre fentes comprennent une paire de deuxièmes fentes disposées radialement l'une en face de l'autre sur le manchon.

Dans des exemples, les premières fentes et les deuxièmes fentes sont séparées de 90 degrés sur le manchon.

Dans des exemples, l'ancre à expansion comprend au moins une ailette anti-rotation entre la tête et le manchon.

Dans certains exemples, l'ailette anti-rotation se rétrécit vers l'intérieur depuis la tête jusqu'à la manchon.

Dans certains exemples, l'ailette anti-rotation empêche la rotation de la cheville après son installation dans une ouverture d'une surface de support.

Dans certains exemples, le moyen de préhension de filetage comprend une région amincie s'étendant à partir d'une fente dans la paroi du manchon.

Dans certains exemples, le moyen de préhension de filetage comprend une pluralité d'ouvertures.

Dans certains exemples, la pluralité d'ouvertures a un profil en arc de cercle.

Dans certains exemples, la pluralité d'ouvertures s'étend à travers des parois opposées du moyen de préhension de filetage.

Dans certains exemples, la pluralité d'ouvertures est sensiblement alignée dans une direction perpendiculaire à l'axe longitudinal du manchon.

Dans certains exemples, le moyen de préhension de filetage comprend au moins une surface évidée.

Dans certains exemples, au moins une des ouvertures de la pluralité est positionnée à l'intérieur de la surface évidée.

Dans certains exemples, au moins une des surfaces évidées a des côtés qui sont parallèles à l'axe longitudinal du manchon.

Dans certains exemples, l'une des ouvertures est reliée à une fente sur la paroi du manchon.

Dans d'autres exemples, la pluralité d'ouvertures est déconnectée d'une fente sur la paroi du manchon.

Dans certains exemples, l'extrémité du moyen de préhension de filetage comprend une encoche qui s'étend vers l'intérieur de la tête.

Dans des exemples, l'encoche est en forme de V.

Dans certains exemples, l'encoche est sensiblement alignée dans une direction perpendiculaire à l'axe longitudinal du manchon.

Dans certains exemples, la pluralité d'ouvertures et l'encoche sont sensiblement alignées dans une direction perpendiculaire à l'axe longitudinal du manchon.

Selon un autre aspect de la présente invention, il est proposé un ensemble de cheville à expansion, comprenant : une cheville à expansion ; et un élément de fixation configuré pour être inséré dans un canal de la cheville à expansion. L'ensemble de cheville à expansion comprend la cheville à expansion de la présente invention et offre donc les mêmes avantages que ceux décrits ci-dessus.

### Brève description des dessins

Des modes de réalisation de l'invention sont décrits ci-après, à titre d'exemple seulement, en référence aux dessins qui les accompagnent, dans lesquels :
La figure 1 illustre un diagramme schématique montrant une cheville à expansion : figure 1a avec un élément de fixation partiellement poussé dans le canal ; figure 1b avec un élément de fixation complètement poussé dans le canal pour étendre la cheville à expansion ; et figure 1c avec l'élément de fixation vissé pour étendre la cheville à expansion ;
La figure 2 illustre une cheville à expansion : figure 2a dans une vue en perspective ; figure 2b dans une première vue de profil latéral ; figure 2c dans une deuxième vue de profil latéral ; figure 2d dans une vue en coupe à travers A-A ; figure 2e dans une vue de profil à partir de l'extrémité avec la tête ; et figure 2f dans une vue de profil à partir de l'extrémité opposée à la tête ; et
La figure 3 illustre une représentation d'une cheville à expansion : figure 3a avec un élément de fixation poussé pour étendre la cheville à expansion ; figure 3b avec un élément de fixation vissé pour étendre la cheville à expansion ; figure 3c fixé dans un mur poreux ; et figure 3d fixé dans un mur solide ;
La figure 4 illustre une cheville à expansion : figure 4a dans une première vue de profil latéral ; figure 4b dans une deuxième vue de profil latéral ; figure 4c dans une vue en coupe à travers B-B ; figure 4d dans une vue en perspective montrant l'extrémité avec la tête ; et figure 4e dans une vue de profil à partir de l'extrémité avec la tête ;
La figure 5 illustre une vue en perspective de la cheville à expansion de la figure 4 ;
La figure 6 illustre une vue en perspective d'une autre cheville à expansion;
La figure 7 illustre une autre cheville à expansion : figure 7a dans une première vue de profil latéral ; et figure 7b dans une seconde vue de profil latéral ;
La figure 8 illustre une représentation de la cheville à expansion de la Figure 7, avec un élément de fixation vissé pour étendre la cheville à expansion, montrant : figure 8a un premier exemple d'expansion, et figure 8b un second exemple d'expansion ;
La figure 9 illustre une vue en perspective d'un autre cheville à expansion montrant une extrémité opposée à la tête ;
Figure 10 illustre une vue en perspective d'un autre cheville à expansion ; et
Figure 11 illustre une vue en perspective d'un autre cheville à expansion.

### Description détaillée

Certains termes sont utilisés dans la description qui suit uniquement pour des raisons de commodité et ne sont pas limitatifs. Les mots "droite", "gauche", "inférieur", "supérieur", "avant", "arrière", "vers le haut", "vers le bas" et "vers le bas" désignent des directions dans les dessins auxquels il est fait référence et se rapportent au composant décrit lorsqu'il est assemblé et monté. Les mots "intérieur", "vers l'intérieur" et "extérieur", "vers l'extérieur" désignent des directions vers et loin, respectivement, d'une ligne centrale désignée ou d'un centre géométrique d'un élément décrit (par exemple, l'axe central), la signification particulière étant facilement apparente dans le contexte de la description.

En outre, dans le présent document, les termes "connecté", "attaché", "couplé", "monté" sont destinés à inclure les connexions directes entre deux membres sans aucun autre membre interposé, ainsi que les connexions indirectes entre les membres dans lesquelles un ou plusieurs autres membres sont interposés. La terminologie comprend les mots spécifiquement mentionnés ci-dessus, leurs dérivés et les mots de signification similaire.

En outre, sauf indication contraire, l'utilisation d'adjectifs ordinaux, tels que "premier", "deuxième", "troisième", etc. indique simplement que l'on se réfère à différents cas d'objets similaires et ne vise pas à impliquer que les objets ainsi décrits doivent se trouver dans un ordre donné, que ce soit dans le temps, dans l'espace, dans la hiérarchie ou de toute autre manière.

Des chiffres de référence similaires sont utilisés pour décrire des caractéristiques similaires.

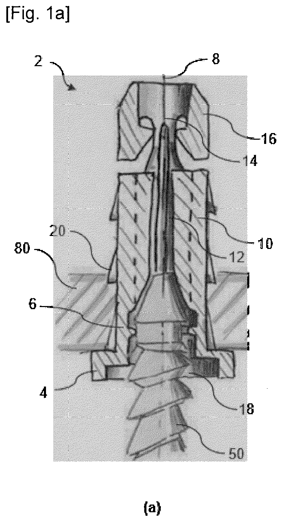

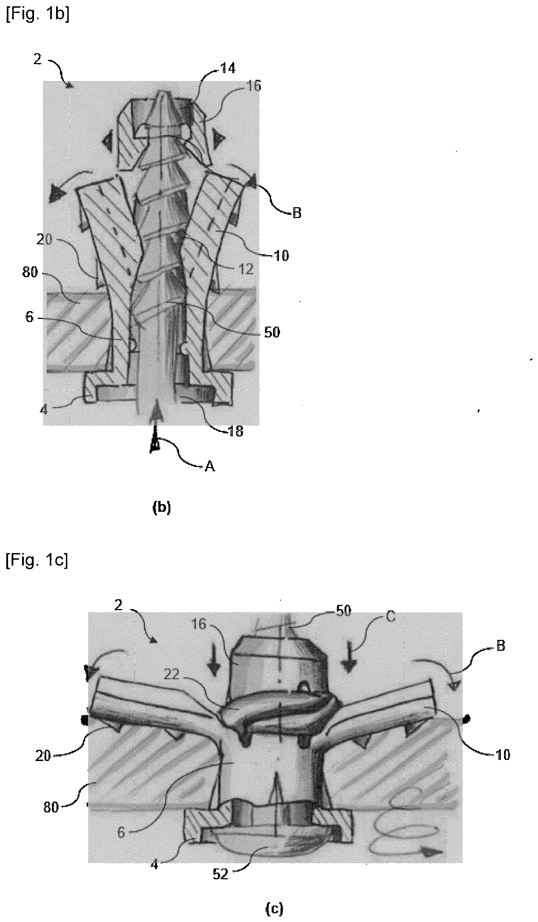

En se référant maintenant à la figure 1, on voit une cheville à expansion 2. La cheville à expansion 2 est pourvue d'une tête 4 et d'un manchon 6 s'étendant à partir de la tête 4 le long de l'axe longitudinal 8 de la cheville à expansion 2. Le manchon 6 comporte deux languettes d'expansion 10 qui permettent au manchon 6 de la cheville à expansion 2 de s'étendre vers l'extérieur, comme cela sera décrit plus loin. Dans cet exemple, les languettes d'expansion 10 sont disposées sur les côtés opposés du manchon 6. Le manchon 6 comporte des portions déformables 22 situées entre les languettes d'expansion 10, comme on peut le voir sur la figure 1(c). Un canal 12 s'étend à travers le manchon 6 et est ouvert à une extrémité au niveau de la tête 4. La tête 4 de la cheville à expansion 2 possède une ouverture 18 qui est encastrée et s'étend dans le canal 12. A l'extrémité opposée du canal 12 par rapport à la tête 4, la cheville à expansion 2 est pourvue d'une portion portant un moyen de préhension de filetage 16. Dans cet exemple, la portion portant un moyen de préhension de filetage 16 est pourvue d'éléments de filetage internes 14. Dans cet exemple, la portion portant un moyen de préhension de filetage 16 est reliée au manchon 6 par les portions déformables 22. Les languettes d'expansion 10 ne sont pas directement reliées à la portion filetée 16.

La surface extérieure des languettes d'expansion 10 est pourvue d'un certain nombre de protubérances 20 qui sont conçues pour s'engager dans une surface de support 80 (c'est-à-dire un mur) pendant l'utilisation, afin de maintenir la cheville à expansion 2 en place.

L'expansion de la cheville à expansion 2 dans une surface de support 80 sera maintenant décrite en référence aux figures 1(b) et 1(c). Dans cet exemple, la surface de support 80 est un panneau constitué d'une plaque de plâtre. Comme illustré, la cheville à expansion 2 est reçue à travers un trou dans la surface de support 80, de sorte que la tête 4 repose sur un premier côté de la surface de support 80 et que la cheville à expansion 2 s'étende jusqu'à l'autre côté de la surface de support 80.

Lors de l'utilisation, un élément de fixation 50 est inséré dans la tête 4 de la cheville à expansion 2 dans la direction indiquée par la flèche 'A' et poussé (par exemple au moyen d'un marteau) à travers le canal 12 le long de l'axe longitudinal 8 de la cheville à expansion 2. Dans cet exemple, l'élément de fixation 50 est un clou en acier inoxydable avec une tige filetée (portion portant un filetage mâle) dans la partie inférieure. L'élément de fixation 50 peut être poussé à travers le canal 12 en martelant l'élément de fixation 50. Le mouvement de la fixation 50 à travers le canal 12 provoque l'expansion (c'est-à-dire l'évasement) des languettes d'expansion 10 vers l'extérieur de l'axe longitudinal 8 dans la direction indiquée par la flèche "B". Les protubérances 20 situées à la surface du manchon 6 s'engagent dans la plaque de plâtre 6 lorsque les languettes d'expansion 10 se déploient vers l'extérieur, maintenant ainsi la cheville à expansion 2 en place.

Dans la position illustrée à la figure 1(b), la cheville à expansion 2 et l'élément de fixation 50 peuvent fournir une force de maintien suffisante pour l'application. De cette manière, la cheville à expansion 2 peut être utilisée comme cheville à frapper.

Lorsque l'élément de fixation 50 est inséré dans le canal 12, les filets (ou le filetage mâle) de l'élément de fixation 50 entrent en contact et s'engagent dans la portion portant un moyen de préhension de filetage 16. Cette dernière se déplace alors légèrement vers l'extérieur par rapport à l'axe longitudinal 8 de la cheville à expansion 2.

En référence à la figure 1(c), lorsque l'élément de fixation 50 est vissé dans le canal 12, les filets (ou filetage mâle) de l'élément de fixation 50 s'engagent dans la portion portant un moyen de préhension de filetage 16 et tirent la portion portant un moyen de préhension de filetage 16 dans une direction indiquée par la flèche 'C' le long de l'axe longitudinal 8 de la cheville d'expansion 2 vers la tête 4. Le mouvement de la portion portant un moyen de préhension de filetage 16 vers la tête 4 fait que les languettes d'expansion 10 s'étendent davantage vers l'extérieur dans la direction indiquée par la flèche 'B'. Ceci engage les protubérances 20 du manchon 6 plus loin dans la surface de support 80 pour augmenter la force de maintien de la cheville à expansion 2 dans la surface de support 80. Lorsque l'élément de fixation 50 est entièrement vissé dans le canal 12 de la cheville à expansion 2, la tête 52 de l'élément de fixation 50 est maintenue dans la cavité prévue dans la tête 2 de la cheville à expansion 2.

Dans cet exemple particulier, les portions déformables 22 s'étendent entre la portion portant un moyen de préhension de filetage 16 et la tête 4 et sont prévues entre les languettes d'expansion 10. Lorsque la portion portant un moyen de préhension de filetage 16 se déplace vers la tête 4 de la cheville à expansion 2, les portions déformables 22 s'affaissent pour réduire la distance entre la portion portant un moyen de préhension de filetage 16 et la tête 4. Dans cet exemple, les portions déformables 22 se déforment en torsion lors du déplacement de la portion portant un moyen de préhension de filetage 16 vers la tête 4 de la cheville à expansion 2.

Le martelage de l'élément de fixation 50 dans le canal 12 provoque l'expansion des languettes d'expansion 10 en les éloignant de l'axe longitudinal 8 jusqu'à un premier déplacement, ce qui maintient la cheville à expansion 2 en place à l'intérieur de la surface de support 80. Le vissage de l'élément de fixation 50 dans le canal 12 pour engager l'élément de fixation 50 avec la portion portant un moyen de préhension de filetage 16 peut alors faire en sorte que la portion portant un moyen de préhension de filetage 16 pousse et étende les languettes d'expansion 10 plus loin de l'axe longitudinal 8 jusqu'à un second déplacement plus grand que le premier déplacement, augmentant ainsi la force de maintien de la cheville à expansion 2 à l'intérieur de la surface d'appui 80. En outre, la déformation des portions déformables 22 permet de retenir davantage la cheville à expansion 2. Par conséquent, la force de maintien et la charge nominale peuvent être ajustées en fonction de la structure de support 80 dans laquelle la cheville à expansion 2 doit être insérée, ce qui permet à la cheville à expansion 2 d'être insérée dans différentes structures de support 80, par exemple des matériaux homogènes et non homogènes, ainsi que des matériaux compacts et non compacts.

Dans certains exemples, au lieu de pousser/marteler l'élément de fixation 50 dans la cheville à expansion 2, il peut être vissé dans la cheville à expansion 2 jusqu'à ce qu'il atteigne la portion portant un moyen de préhension de filetage 16. Lors du vissage initial, l'élément de fixation 50 dévie les languettes d'expansion 10 vers l'extérieur et, une fois que l'élément de fixation 50 s'engage dans la portion portant un moyen de préhension de filetage 16, une rotation supplémentaire tire la portion portant un moyen de préhension de filetage 16 vers la tête 4, comme décrit ci-dessus. En conséquence, la cheville à expansion 2 peut être utilisée en martelant et/ou en vissant la fixation 50.

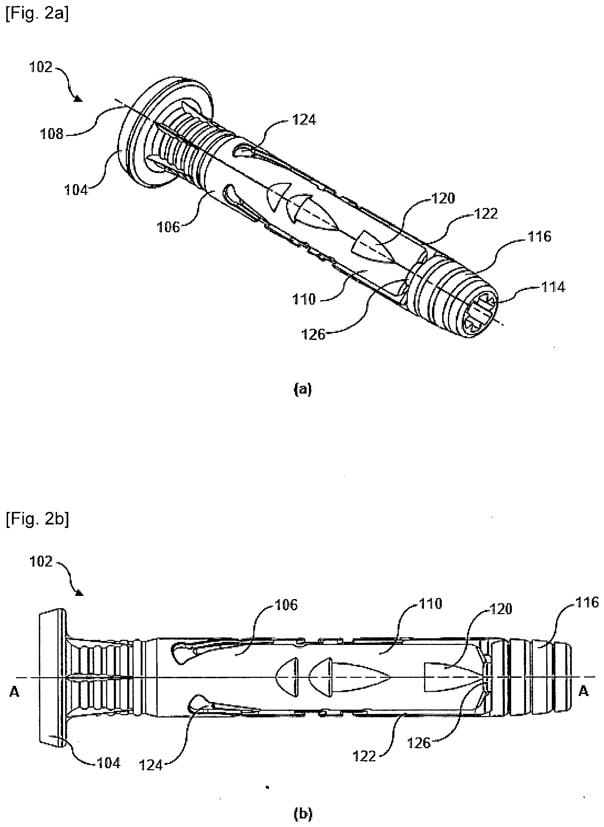

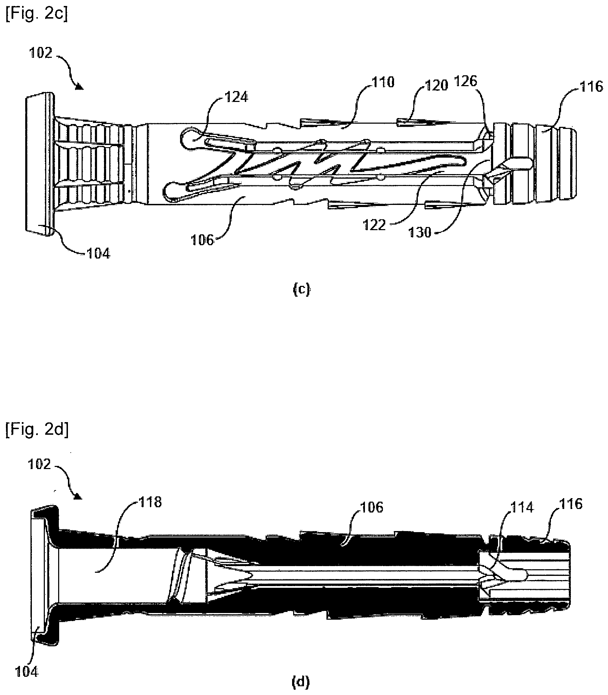

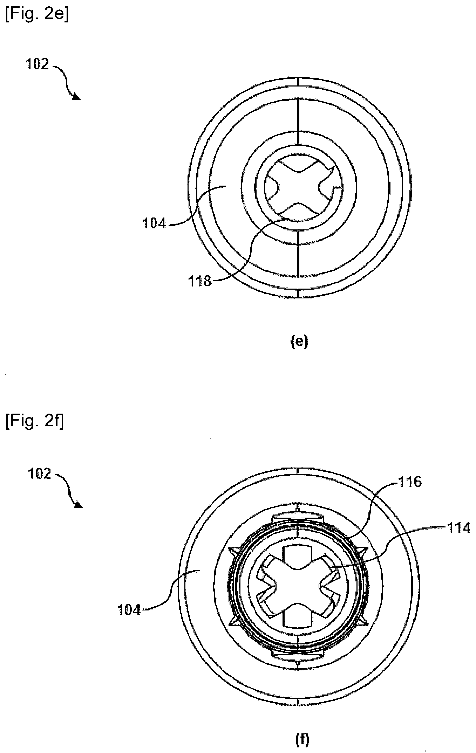

La figure 2 montre un autre exemple de cheville à expansion 102. La cheville à expansion 102 comporte une tête 104, un manchon 106, un axe longitudinal 108, une portion portant un moyen de préhension de filetage 116 avec des filets (ou éléments de filetage) internes 114 et des saillies 120 qui sont les mêmes que celles de la cheville d'expansion 2 de l'exemple précédent et, par conséquent, ces caractéristiques ne seront pas décrites à nouveau en détail.

Les languettes d'expansion 110 de la cheville à expansion 102 sont définies par des fentes 124 prévues à travers la paroi du manchon 106. Les languettes d'expansion 110 sont reliées de manière amovible à la portion portant un moyen de préhension de filetage 116. Une connexion frangible 126 est prévue entre chaque languette d'expansion 110 et la portion portant un moyen de préhension de filetage 116, qui est conçue pour se rompre lorsque les languettes d'expansion 110 s'étendent vers l'extérieur. Les portions déformables 122 du manchon sont situées entre les fentes 124 et sont reliées à l'extrémité de la portion portant un moyen de préhension de filetage 116. Dans cet exemple, les portions déformables 122 sont disposées parallèlement à l'axe longitudinal 108 jusqu'à ce qu'elles soient reliées à la portion portant un moyen de préhension de filetage 116 par une portion de connexion 130 formant un angle. Dans cet exemple, l'angle formé par la portion de connexion 130 entre l'extrémité des portions déformables 122 et la portion portant un moyen de préhension de filetage 116 est de 45 degrés. D'autres angles formés par la portion de connexion 130 sont également envisagés, tels que 15 degrés, 30 degrés, 60 degrés et 75 degrés, par exemple. Il est envisagé que la portion portant un moyen de préhension de filetage 116 et les portions déformables 122 soient formées d'un seul tenant.

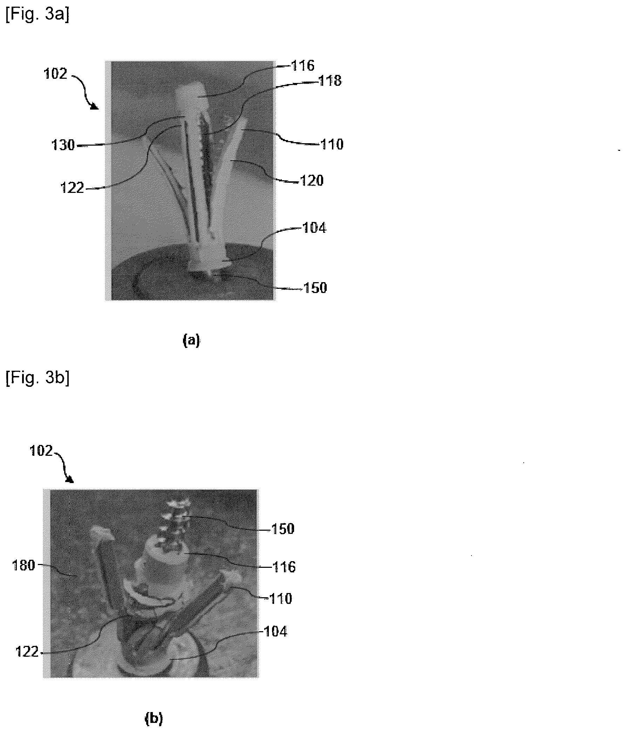

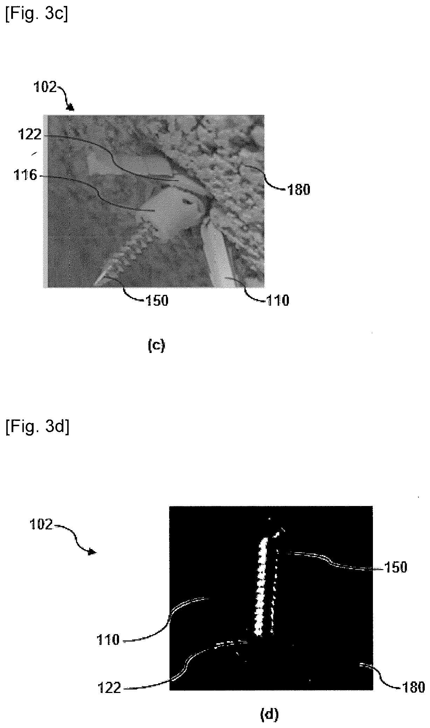

L'expansion de la cheville à expansion 102 de la figure 2 à l'intérieur d'une surface de support 180 sera maintenant décrite en référence à la figure 3. Dans cet exemple, la surface de support 180 est un mur en béton.

Lors de l'utilisation, un élément de fixation 150 est reçu dans la cheville à expansion 2 à partir de l'extrémité où se trouve la tête 2. L'élément de fixation 150 est poussé à travers le canal 112 défini dans le manchon 106 en martelant l'élément de fixation 150, ce qui provoque l'expansion des languettes d'expansion 110 vers l'extérieur de l'axe longitudinal de la cheville d'expansion 102. Lorsque les languettes d'expansion 110 commencent à s'étendre vers l'extérieur, la connexion frangible 126 entre les languettes d'expansion 110 et la portion portant un moyen de préhension de filetage 116 se rompt, ce qui permet aux languettes d'expansion 110 de s'étendre davantage vers l'extérieur. Les protubérances 120 situées à la surface du manchon 106 s'engagent dans le mur en béton 180 lorsque les languettes d'expansion 110 se déploient vers l'extérieur, ce qui maintient la cheville à expansion 102 en place.

Lorsque l'élément de fixation 150 est vissé plus avant dans le canal 112, les filets (ou le filetage mâle) de l'élément de fixation 150 s'engagent dans la portion portant un moyen de préhension de filetage 116, tirant la portion portant un moyen de préhension de filetage 116 vers la tête 104 et affaissant les portions déformables 122 du manchon 106 dans le processus, et provoquant à son tour l'expansion des languettes d'expansion 110 vers l'extérieur. Les protubérances 120 sur la surface extérieure du manchon 106 exercent une pression supplémentaire contre la structure de support 180, augmentant la force de maintien de la cheville à expansion 102 à l'intérieur de la surface de support 180. Comme le montrent les figures 3(b), 3(c) et 3(d), les portions déformables 122 du manchon 106 se déforment en torsion autour de l'axe longitudinal de la cheville à expansion 102, réduisant la distance entre la portion portant un moyen de préhension de filetage 116 et la tête 104 de la cheville à expansion 102.

Dans certains exemples, au lieu de pousser/marteler l'élément de fixation 50 dans la cheville à expansion 2, il peut être vissé dans la cheville à expansion 2 jusqu'à ce qu'il atteigne la portion portant un moyen de préhension de filetage 16. Lors du vissage initial, l'élément de fixation 50 dévie les languettes d'expansion 10 vers l'extérieur et, une fois que l'élément de fixation 50 s'engage dans la portion portant un moyen de préhension de filetage 16, une rotation supplémentaire tire la portion portant un moyen de préhension de filetage 16 vers la tête 4, comme décrit ci-dessus. En conséquence, la cheville à expansion 2 peut être utilisé en martelant et/ou en vissant l'élément de fixation 50.

Par conséquent, la force de maintien de la cheville à expansion 102 peut être ajustée en fonction du mode de fonctionnement, ce qui rend la cheville à expansion 102 adaptée à l'insertion dans des structures de support 180 ayant différentes épaisseurs et constituées de différents matériaux, par exemple des matériaux homogènes et non homogènes, ainsi que des matériaux compacts et non compacts. Un exemple d'expansion de la cheville à expansion 102 dans un matériau non homogène est illustré à la figure 3(c), tandis qu'un exemple d'expansion de la cheville à expansion 102 dans un matériau homogène est illustré à la figure 3(d). La cheville à expansion 102 peut être utilisée dans des structures de support 180 de différentes épaisseurs et constituées de différents matériaux. La cheville à expansion selon l'invention peut par exemple être utilisée comme cheville murale par exemple dans un trou borgne.

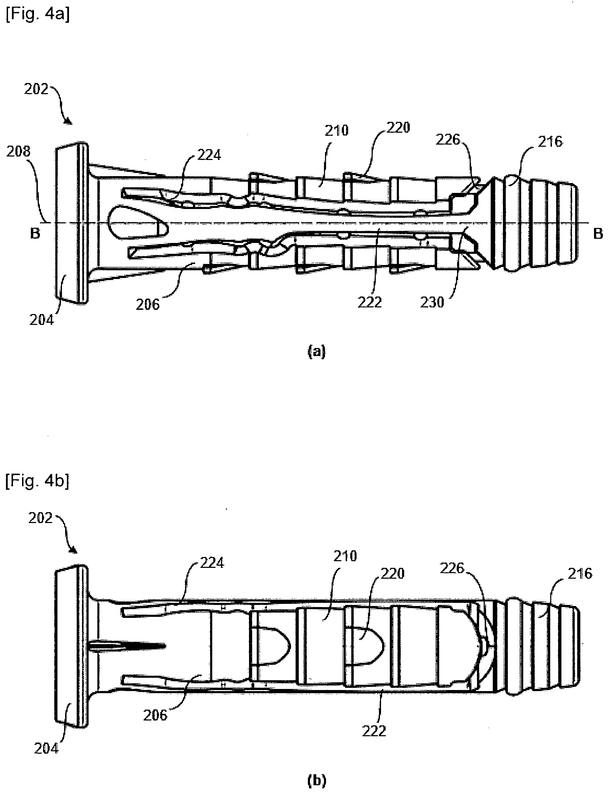

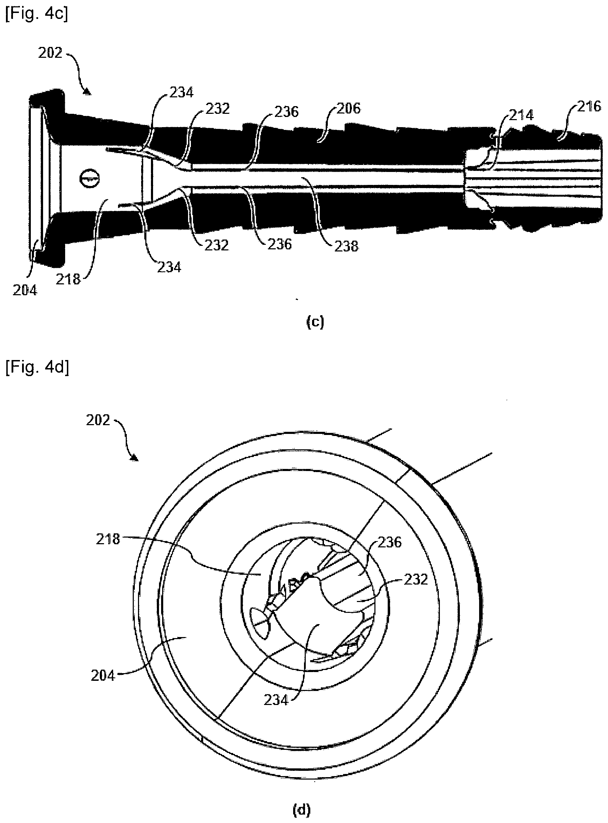

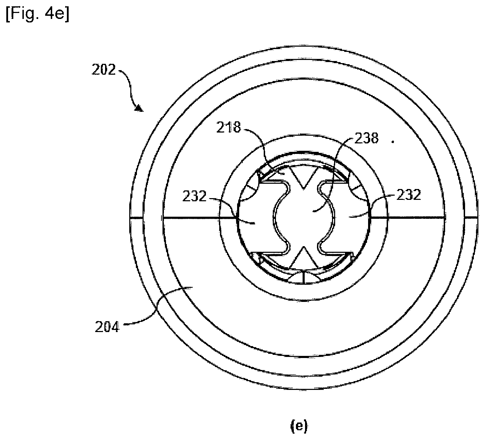

La figure 4 montre un autre exemple de cheville à expansion 202. La cheville d'expansion 202 comporte une tête 204, un manchon 206, un axe longitudinal 208, une portion portant un moyen de préhension de filetage 216 avec des filets internes 214, des saillies 220, des languettes d'expansion 210 définies par des fentes 224, des portions déformables 222, des connexions frangibles 226 et des portions de connexion 230 qui sont les mêmes que celles de la cheville d'expansion 102 de l'exemple précédent et, par conséquent, ces caractéristiques ne seront pas décrites à nouveau dans le détail.

Comme le montrent les figures 4(c) à 4(e), le canal s'étendant à travers le manchon 206 de la cheville à expansion 202 est pourvu de deux guides de fixation 232. Les guides de fixation 232 sont fournis en tant que paire et sont orientés l'un en face de l'autre. Bien que dans cet exemple, il y ait deux guides de fixation 232, il est envisagé de prévoir un nombre différent de guides de fixation 232, par exemple un seul guide de fixation 232, ou trois guides de fixation 232 ou plus. Il est possible de prévoir quatre guides de fixation 232 décalés de 90 degrés les uns par rapport aux autres dans le canal. Chaque guide de fixation 232 est pourvu d'une surface inclinée 234 qui s'étend entre une paroi du canal et une portion du guide de fixation 232 dans le manchon 206, à l'écart de la tête 204. La surface inclinée 234 peut se situer entre une paroi du canal et une surface allongée en forme de C 236 du guide 232. Les surfaces allongées 236 des guides de fixation 232 forment ensemble un passage intérieur de diamètre réduit par rapport au canal du manchon 206.

Lors de l'utilisation, le(s) guide(s) de fixation 232 de la cheville à expansion 202 améliore(nt) le guidage d'une fixation (par exemple 150, la figure 3) lorsqu'elle est insérée dans la cheville à expansion 202, par exemple en la martelant ou en la vissant. Le(s) guide(s) de fixation dévie(nt) la pointe de la fixation 150 lors du contact, de sorte que la fixation 150 s'aligne sur l'axe de la cheville à expansion 202. Cela permet un alignement axial plus fiable lors de l'insertion de l'élément de fixation 150.

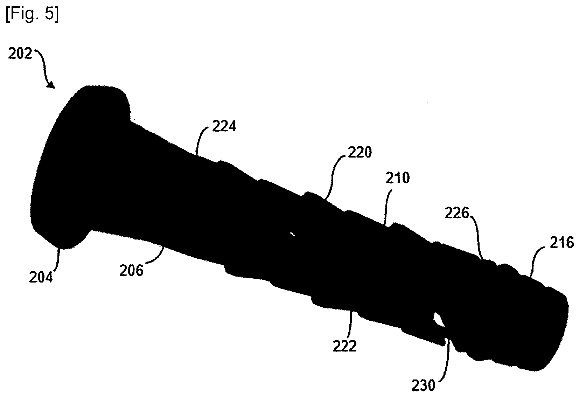

La figure 5 montre une cheville d'expansion 202 incorporant les guides de fixation 232 de la figure 4, de sorte que lorsqu'une fixation (150, figure 3) est insérée à travers la tête 204 de la cheville d'expansion 202 et dans le manchon 206, la fixation 150 est alignée axialement avec la cheville d'expansion 202.

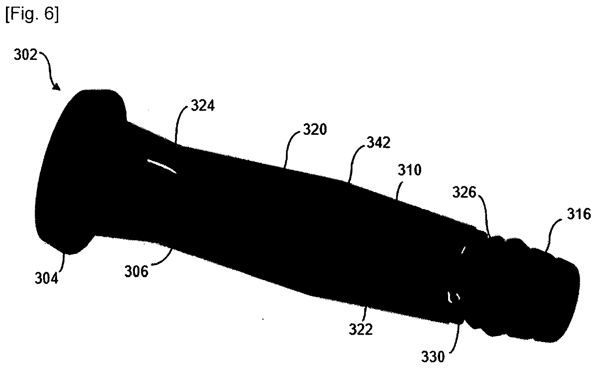

La figure 6 montre une cheville d'expansion 302 qui est similaire à la cheville d'expansion 202 de la figure 5. Cependant, le manchon 306 de la cheville d'expansion 302 est pourvu d'ailettes externes 342 qui sont déformables, ce qui permet aux ailettes 342 de dévier dans la cheville d'expansion 202 lorsque la cheville 202 est insérée dans un trou. Dans cet exemple, il y a trois ailettes externes 342. Toutefois, il est possible de prévoir un nombre différent d'ailettes 342, par exemple une, deux, quatre ou plus d'ailettes 342. Les ailettes 342 s'inclinent vers un sommet, de la tête 304 vers le centre du manchon 306. Depuis le sommet, les ailettes 342 descendent du centre du manchon 306 jusqu'à la portion portant un moyen de préhension de filetage 316.

Les ailettes 342 peuvent être réparties uniformément sur la surface du manchon 306. La présence d'ailettes 342 déformables est avantageuse car elle permet d'insérer la cheville à expansion 302 dans des ouvertures de différentes tailles dans les surfaces de support. Il est envisagé que les ailettes externes 342 soient formées intégralement ou fixées d'une autre manière aux guides de fixation (232, figure 4) de sorte que la déformation des ailettes 342 vers l'intérieur entraîne la déformation des guides de fixation 232 vers l'intérieur, afin de faire varier la taille du canal intérieur entre les guides de fixation 232.

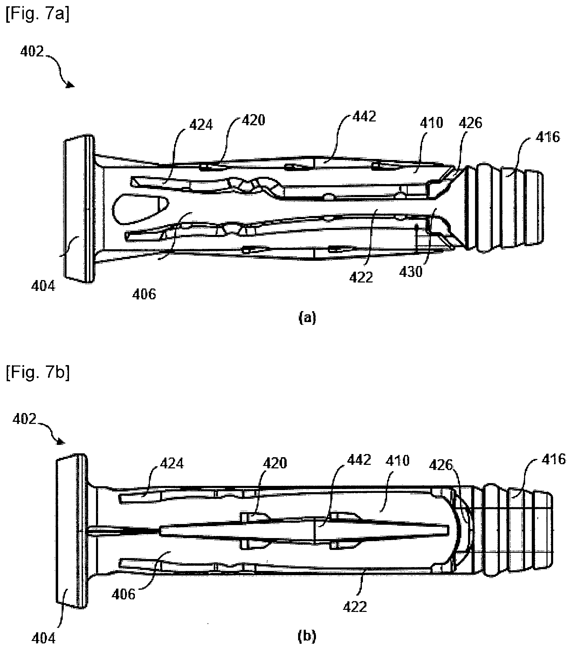

La figure 7 montre une autre cheville à expansion 402 qui incorpore les ailettes externes 442 décrites précédemment. Comme le montre la figure 7(b), l'épaisseur des ailettes externes 442 augmente entre la tête 404 et un sommet au centre du manchon 406. L'épaisseur diminue ensuite à partir du sommet au centre du manchon 406 en direction de la portion portant un moyen de préhension de filetage 416. Dans cet exemple, la cheville à expansion 402 est munie d'un manchon 406 comportant quatre languettes d'expansion 410. Les languettes d'expansion 410 sont définies par des fentes 424 pratiquées à travers la paroi du manchon 406. Les languettes d'expansion 410 sont chacune pourvues de saillies 420 qui sont conçues pour s'engager dans une surface de support pendant l'utilisation, afin de maintenir la cheville d'expansion 402 en place. Les languettes d'expansion 410 sont reliées de manière amovible à la portion portant un moyen de préhension de filetage 416. Dans cet exemple, une connexion frangible 426 est prévue entre chaque languette d'expansion 410 et la partie filetée 416. Le manchon 406 comporte des portions déformables 422 entre les languettes d'expansion 410. Les portions déformables 422 sont reliées à la portion portant un moyen de préhension de filetage 416 par une portion de connexion 430.

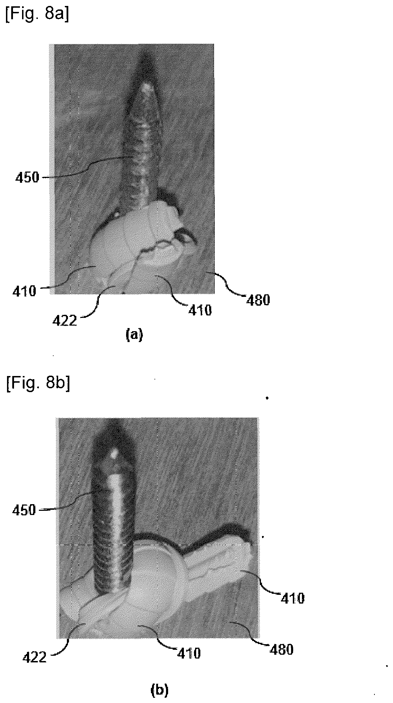

La figure 8 montre la déformation de la cheville à expansion 402. Lors de l'utilisation, la cheville à expansion 402 est insérée dans une surface de support 480. Un élément de fixation 450 est inséré dans la cheville à expansion 402 à partir de l'extrémité de la tête 404 et à travers le manchon 406. La fixation 450 peut être insérée par martelage, ce qui provoque l'expansion vers l'extérieur des languettes d'expansion 410. L'expansion vers l'extérieur des languettes d'expansion 410 entraîne la rupture de la connexion frangible 426 entre les languettes d'expansion 410, ce qui permet aux languettes d'expansion 410 de s'évaser davantage vers l'extérieur et de s'engager dans la surface de support 480 pour maintenir la cheville d'expansion 402 en place.

Le vissage de la fixation 450 dans la cheville à expansion 402 entraîne l'engagement des filets de la fixation 450 dans la partie de préhension des filets 416. Cela tire la partie de prise de fil 416 vers la tête 404 de la cheville à expansion 402, ce qui fait s'effondrer les portions déformables 422 du manchon 406. Lorsque les portions déformables 422 s'affaissent de cette manière, les languettes d'expansion 410 se dilatent davantage vers l'extérieur et commencent également à se déformer en torsion autour de l'axe longitudinal de la cheville d'expansion 402. Lorsque la fixation 450 continue d'être vissée, les portions déformables 422 du manchon continuent de s'affaisser, ce qui déforme davantage en torsion les languettes d'expansion 410, jusqu'à ce qu'elles commencent à s'enrouler l'une autour de l'autre. Cet engagement des languettes d'expansion 410 regroupe les languettes d'expansion 410, par exemple en s'enroulant l'une autour de l'autre ou en se chevauchant, ce qui augmente encore la force de maintien de la cheville d'expansion 402 à l'intérieur de la surface de support 480.

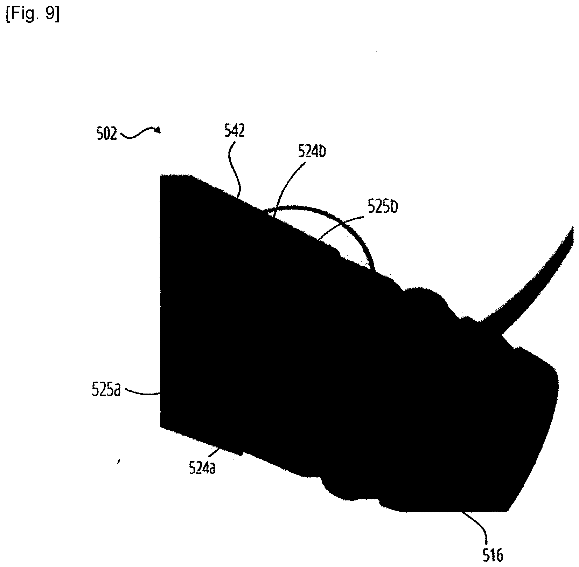

La figure 9 montre un autre exemple de cheville d'expansion 502, illustrant l'extrémité de la cheville d'expansion 502 opposée à la tête. La cheville d'expansion 502 est similaire à celle de la figure 2, de sorte que les caractéristiques communes ne seront pas décrites en détail.

Le manchon de la cheville à expansion 502 est pourvu d'ailettes externes 542 qui sont déformables, ce qui permet aux ailettes 542 de dévier dans la cheville à expansion 502 lorsque la cheville 502 est insérée dans une ouverture d'une structure de support. Dans cet exemple, quatre fentes 524 sont prévues dans la paroi du manchon. Les fentes 524 sont séparées les unes des autres par un angle de 90 degrés. Contrairement à l'exemple de la figure 2 dans lequel les fentes 124 sont reliées à l'extrémité du moyen de préhension de filetage 116, les fentes 524 dans le présent exemple ne sont pas reliées au moyen de préhension de filetage 516. Cette disposition permet d'augmenter la rigidité en torsion de la paroi du manchon.

Les quatre fentes 524 comprennent une première fente 524a qui se termine par un premier bord 525a, et une deuxième fente 524b qui se termine par un deuxième bord 525b. Par rapport à la première fente 524a qui présente un renfoncement à proximité du premier bord 525a vers le moyen de préhension de filetage 516, un espace entre la deuxième fente 524b et le moyen de préhension de filetage 516 est comblé. Cette disposition augmente encore la rigidité à la torsion de la paroi du manchon. Le premier bord 525a et le deuxième bord 525b sont disposés perpendiculairement l'un à l'autre. Le premier bord 525a est disposé perpendiculairement à la paroi du manchon.

Le premier bord 525a est disposé perpendiculairement à un axe longitudinal de la cheville à expansion 502. Le deuxième bord 525b est parallèle à l'axe longitudinal de la cheville à expansion 502. La première fente 524a a une troisième fente correspondante disposée à 180 degrés autour du manchon. La deuxième fente 524b a une quatrième fente correspondante disposée à 180 degrés autour du manchon. Ainsi, une paire de premières fentes 524a est disposée radialement à l'opposé l'une de l'autre. Une paire de secondes fentes 524b est disposée radialement en face l'une de l'autre et décalée de 90 degrés par rapport aux premières fentes 524a.

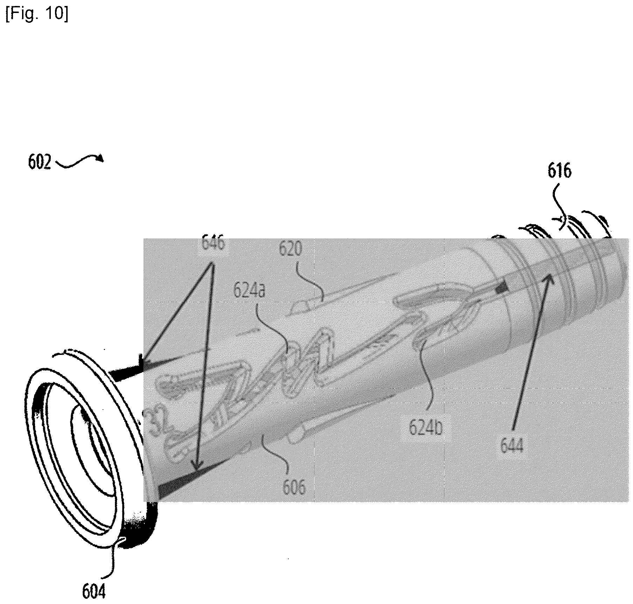

La figure 10 montre un autre exemple de cheville d'expansion 602. La cheville d'expansion 602 comporte une tête 604 et des protubérances 620 qui sont identiques à l'arrangement de la figure 2 et qui ne seront donc pas décrites en détail.

Dans cet exemple, la cheville à expansion 602 est pourvue d'ailettes anti-rotation 646 entre la tête 604 et le manchon 606. Ces ailettes empêchent la rotation de la cheville 602 après son installation dans une ouverture d'une surface de support. Les ailettes anti-rotation 646 s'effilent vers l'intérieur depuis la tête 604 jusqu'au manchon 606.

Le manchon 606 de la cheville à expansion 602 est pourvu d'une première fente 624a du côté de la tête 604 et d'une deuxième fente 624b entre la première fente 624a et un moyen de préhension de filetage 616. La deuxième fente 624b est reliée à l'extrémité du moyen de préhension de filetage 616. Dans cet exemple, le moyen de préhension de filetage 616 est pourvue d'une zone amincie 644 s'étendant parallèlement à l'axe longitudinal de la cheville 602. La zone amincie 644 s'étend à partir de la deuxième fente 624b et est reliée à celle-ci. En prévoyant une zone amincie 644 dans le moyen de préhension de filetage 616, la rigidité du moyen de préhension de filetage 616 est réduite.

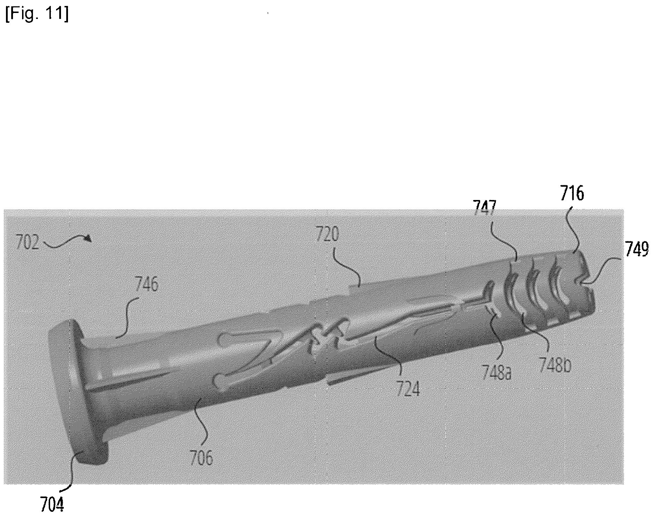

La figure 11 montre un autre exemple de cheville d'expansion 702. La cheville d'expansion 702 comporte une tête 704, des protubérances 720 et des ailettes anti-rotation 746 qui sont identiques à l'arrangement de la figure 10 et ne seront donc pas décrites à nouveau en détail.

Dans cet exemple, la cheville d'expansion 702 comporte un manchon 706 pourvu d'une fente 724. Le moyen de préhension de filetage 716 de la cheville d'expansion 702 est pourvu d'un certain nombre d'ouvertures 748a, 748b. Les ouvertures 748a, 748b s'étendent à travers les parois opposées du moyen de préhension de filetage 716. L'alignement des ouvertures 748a, 748b est tel qu'elles sont sensiblement alignées dans une direction perpendiculaire à l'axe longitudinal du manchon 706. Dans cet exemple, les ouvertures 748a, 748b ont un profil arqué. La fente 724 se termine dans l'une des ouvertures 748a située le plus près de la tête 704. Dans cet exemple, la fente 724 et l'ouverture 748a sont déconnectées. Cependant, il est envisagé que la fente 724 et l'ouverture 748a soient alternativement connectées.

Le moyen de préhension de filetage 716 comprend un certain nombre de surfaces en retrait 747 dans lesquelles certaines des ouvertures 748b sont positionnées. Les surfaces en retrait 747 forment une zone amincie du moyen de préhension de filetage 716 afin de réduire sa rigidité. Les surfaces évidées 747 ont une forme correspondant aux ouvertures 748b. Les côtés des surfaces évidées 747 sont parallèles à l'axe longitudinal du manchon 706.

Une extrémité du moyen de préhension de filetage 716 est pourvue d'une encoche 749 qui s'étend vers l'intérieur en direction de la tête 704. Dans cet exemple, l'encoche 749 est en forme de V. L'encoche 749 est sensiblement alignée dans une direction perpendiculaire à l'axe longitudinal du manchon 706. Dans cet exemple, l'encoche 749 et la pluralité d'ouvertures 748a, 748b sont sensiblement alignées dans une direction perpendiculaire à l'axe longitudinal du manchon 706. Ainsi, une partie centrale de l'encoche 749 et chacune des ouvertures 748a, 748b sont alignées avec l'axe longitudinal du manchon 706. La présence des ouvertures 748a, 748b réduit encore l'épaisseur du moyen de préhension de filetage 716, réduisant ainsi sa rigidité.

Les personnes compétentes dans l'art apprécieront que les exemples détaillés ci-dessus ont été décrits à titre d'exemple uniquement et non dans un sens limitatif, et que diverses altérations et modifications sont possibles sans s'écarter de la portée de l'invention . Les exemples détaillés décrits ci-dessus peuvent faire l'objet de diverses modifications.

Dans la présente demande de brevet, les mots "comprennent" et "contiennent" et leurs variations signifient "y compris mais non limité à", et ils ne sont pas destinés à exclure (et n'excluent pas) d'autres fractions, additifs, composants, nombres entiers ou étapes. Dans la présente demande de brevet, le singulier englobe le pluriel, sauf si le contexte l'exige. En particulier, lorsque l'article indéfini est utilisé, la présente demande de brevet doit être comprise comme envisageant la pluralité aussi bien que la singularité, à moins que le contexte ne l'exige autrement.

Les caractéristiques, les nombres entiers, les caractéristiques, les composés, les groupements chimiques ou les groupes décrits en liaison avec un aspect, un mode de réalisation ou un exemple particulier de l'invention doivent être considérés comme applicables à tout autre aspect, mode de réalisation ou exemple décrit dans le présent document, à moins qu'ils ne soient incompatibles avec ce dernier. Toutes les caractéristiques divulguées dans la présente spécification (y compris l'abrégé et les dessins qui l'accompagnent), et/ou toutes les étapes d'une méthode ou d'un procédé divulgué, peuvent être combinées dans n'importe quelle combinaison, à l'exception des combinaisons où au moins certaines de ces caractéristiques et/ou étapes s'excluent mutuellement. L'invention n'est pas limitée aux modes de réalisation susmentionnées.

Les personnes qualifiées dans l'art apprécieront que le(s) mode(s) de réalisation ci-dessus n'ont été décrits qu'à titre d'exemple et non dans un sens limitatif, et que diverses altérations et modifications sont possibles sans s'écarter de la portée de l'invention telle qu'elle est définie dans la présente description. Il est possible d'apporter diverses modifications aux modes de réalisations décrits ci-dessus.

## Revendications

1. Cheville à expansion (2) comprenant une tête (4) et un manchon (6) s'étendant à partir de la tête le long d'un axe longitudinal (8), le manchon comprenant :
au moins une languette d'expansion (10) ;
un canal ouvert (12) au niveau de la tête pour recevoir un élément de fixation (50) et disposé de manière à ce que la/les languettes d'expansion se déploie(nt) vers l'extérieur lorsque l'élément de fixation est poussé dans le canal à partir de la tête ; et
une portion portant un moyen de préhension de filetage (16) disposée à une extrémité opposée du canal par rapport à la tête, la portion portant un moyen de préhension de filetage étant configurée pour être engagée par une portion portant un filetage mâle de l'élément de fixation lorsqu'il est vissé dans le canal, de sorte à tirer la portion portant un moyen de préhension de filetage vers la tête par la rotation de l'élément de fixation afin d'étendre la/les languette(s) d'expansion vers l'extérieur.

2. Cheville à expansion selon la revendication 1, dans laquelle le manchon comprend un guide de fixation (232) disposé dans le canal, adapté pour aligner l'élément de fixation avec l'axe longitudinal.

3. Cheville à expansion selon la revendication 2, dans laquelle le guide de fixation comprend une surface inclinée (234) à proximité de l'extrémité de la tête de la cheville à expansion.

4. Cheville à expansion selon la revendication 3, dans laquelle la surface inclinée s'étend entre une paroi intérieure du canal et une portion rétrécie du guide de fixation.

5. Cheville à expansion selon la revendication 4, dans laquelle la portion rétrécie du guide de fixation comprend une section transversale en forme de C (236).

6. Cheville à expansion selon l'une quelconque des revendications 2 à 5, dans laquelle le manchon comprend une paire de guides de fixation opposés dans le canal.

7. Cheville à expansion selon l'une quelconque des revendications précédentes, dans laquelle le manchon comprend au moins deux languettes d'expansion.

8. Cheville à expansion selon la revendication 7, dans laquelle le tirage de la portion portant un moyen de préhension de filetage vers la tête par la rotation de l'élément de fixation est organisée pour déformer en torsion les languettes d'expansion.

9. Cheville à expansion selon la revendication 8, dans laquelle la déformation par torsion des languettes d'expansion fait qu'au moins une languette d'expansion superpose au moins une autre languette d'expansion.

10. Un ensemble de cheville à expansion, comprenant
une cheville à expansion (2) selon l'une quelconque des revendications 1 à 9 ; et
un élément de fixation (50) configuré pour être inséré dans le canal de la cheville à expansion.

## Patentansprüche

1. Spreizdübel (2), aufweisend einen Kopf (4) und eine Hülse (6), die sich von dem Kopf entlang einer Längsachse (8) erstreckt, wobei die Hülse Folgendes aufweist:
mindestens eine Spreizlasche (10);
einen Kanal (12), der sich an dem Kopf öffnet, um ein Befestigungselement (50) aufzunehmen, und so angeordnet ist, dass die Spreizlasche(n) nach außen ausgefahren wird/werden, wenn das Befestigungselement von dem Kopf in den Kanal gedrückt wird; und
einen Abschnitt, der ein Gewindegreifmittel (16) trägt, das an dem dem Kopf gegenüberliegenden Ende des Kanals positioniert ist, wobei der Abschnitt, der ein Gewindegreifmittel trägt, so eingerichtet ist, dass er von einem Abschnitt des Befestigungselements, der ein Außengewinde trägt, in Eingriff genommen wird, wenn er in den Kanal eingeschraubt wird, sodass der Abschnitt, der ein Gewindegreifmittel trägt, durch die Drehung des Befestigungselements zu dem Kopf hin gezogen wird, um die Spreizlasche(n) nach außen zu strecken.

2. Spreizdübel nach Anspruch 1, bei dem die Hülse eine Befestigungsführung (232) aufweist, die in dem Kanal angeordnet ist und dazu ausgelegt ist, das Befestigungselement mit der Längsachse auszurichten.

3. Spreizdübel nach Anspruch 2, bei dem die Befestigungsführung eine geneigte Fläche (234) nahe dem Ende des Kopfes des Spreizdübels aufweist.

4. Spreizdübel nach Anspruch 3, bei dem sich die geneigte Fläche zwischen einer Innenwand des Kanals und einem verjüngten Abschnitt der Befestigungsführung erstreckt.

5. Spreizdübel nach Anspruch 4, bei dem der verjüngte Abschnitt der Befestigungsführung einen C-förmigen Querschnitt (236) aufweist.

6. Spreizdübel nach einem der Ansprüche 2 bis 5, bei dem die Hülse ein Paar gegenüberliegender Befestigungsführungen in dem Kanal aufweist.

7. Spreizdübel nach einem der vorhergehenden Ansprüche, bei dem die Hülse mindestens zwei Spreizlaschen aufweist.

8. Spreizdübel nach Anspruch 7, bei dem das Ziehen des Abschnitts, der ein Gewindegreifmittel trägt, in Richtung des Kopfes durch Drehen des Befestigungselements so gestaltet ist, dass dadurch die Spreizlaschen verdreht werden.

9. Spreizdübel nach Anspruch 8, bei dem das Verdrehen der Spreizlaschen bewirkt, dass mindestens eine Spreizlasche mindestens eine andere Spreizlasche überlappt.

10. Spreizdübelset, Folgendes aufweisend
einen Spreizdübel (2) nach einem der Ansprüche 1 bis 9; und
ein Befestigungselement (50), das eingerichtet ist, in den Kanal des Spreizdübels eingeführt zu werden.

## Claims

1. An expansion anchor (2) comprising a head (4) and a sleeve (6) extending from the head along a longitudinal axis (8), the sleeve comprising:
at least one expansion tab (10);
a channel (12) opening at the head for receiving a fastener (50) and arranged such that the expansion tab(s) is/are deployed outward when the fastener is pushed into the channel from the head; and
a portion bearing a thread-gripping means (16) positioned on the opposite end of the channel from the head, the portion bearing a thread-gripping means being configured to be engaged by a portion of the fastener bearing a male thread when it is screwed into the channel, such that the portion bearing a thread-gripping means is pulled toward the head by the rotation of the fastener in order to extend the expansion tab(s) outward.

2. The expansion anchor according to claim 1, in which the sleeve comprises a fastening guide (232) located in the channel, adapted to align the fastener with the longitudinal axis.

3. The expansion anchor according to claim 2, in which the fastening guide comprises an inclined surface (234) near the end of the head of the expansion anchor.

4. The expansion anchor according to claim 3, in which the inclined surface extends between an inner wall of the channel and a tapered portion of the fastening guide.

5. The expansion anchor according to claim 4, in which the tapered portion of the fastening guide comprises a C-shaped cross-section (236).

6. The expansion anchor according to any of claims 2 to 5, in which the sleeve comprises a pair of opposing fastening guides in the channel.

7. The expansion anchor according to any of the preceding claims, in which the sleeve comprises at least two expansion tabs.

8. The expansion anchor according to claim 7, in which the pulling of the portion bearing a thread-gripping means toward the head by rotating the fastener is designed to twist the expansion tabs.

9. The expansion anchor according to claim 8, in which twisting the expansion tabs causes at least one expansion tab to overlap at least one other expansion tab.

10. An expansion anchor set, comprising
an expansion anchor (2) according to any of claims 1 to 9; and
a fastener (50) configured to be inserted into the channel of the expansion anchor.
